# EUROPEAN PATENT APPLICATION

(11) **EP 4 108 407 A1**
(43) Date of publication of application: **28.12.2022**
(21) Application number: 21181495.9
(22) Date of filing: 24.06.2021
(51) Int. Cl.: B29C 44/56, C08J 9/38, B29C 44/60

(54) **METHOD FOR MANUFACTURING RETICULATED FOAMS AND APPARATUS THEREFOR**

(71) Applicant: ATL Schubs GmbH, 31711 Luhden (DE)
(72) Inventor: Struckmann, Jörn, 31675 Bückeburg (DE); Schulz, Axel, 31855 Aerzen (DE)
(74) Representative: AOMB Polska Sp. z.o.o.

(57) **Abstract**

The subject-matter of the present invention is a method for manufacturing reticulated polymer foams, consisting in carrying out a controlled explosion in a reticulation chamber (2) filled with a mixture of combustible gases, in which the processed block of polymer foam is placed. This method allows the maximum reduction of material losses resulting from damage to the surface of the processed foam block (3) caused by the presence of an inadequate amount (caused by inaccurate calculations) of non-flammable gas in the gap between the surface of the foam block (3) and the walls of the chamber (2), introduced therein to replace of a certain amount of flammable gas. The method according to the invention is based on the use of a measuring device (4) for determining the parameters of a foam block (3), such as its geometrical dimensions, before introducing this foam block (3) into the reticulation chamber (2). This makes it possible to accurately calculate the amount of non-flammable gas to be introduced into the gap between the foam block (3) and the walls of the reticulation chamber (2), whereby the calculations can also be conducted taking into account the value of the atmospheric pressure and the temperature of the gases. The present invention also relates to an apparatus for reticulating foams suitable for carrying out this method.

## Description

### Technical field

The present invention relates to a method for reticulation of foamed materials, that is, producing foams with an open-cell structure that are permeable to liquids, air and other gases. In the reticulation process, the cell membranes in the initial closed-cell structure of the foam are removed while maintaining the basic structure of the foam, thereby obtaining a gas- and liquid-permeable open-cell structure. The invention also relates to an apparatus for carrying out this method.

### Background art

Due to their unique properties, reticulated foams find now wide application, for example in engineering and construction. They are used, inter alia, as filtration foams constituting the cartridges for various types of filters, including, above all, air, water and fluid filters for cars and motorcycles. They are also known to be used in the production of mattresses and furniture, but they are also used even in medicine or nautics.

In general, the reticulation process is based on opening the cells in the foam mechanically with a gas mixture. The raw material in the form of a foam block is placed in a specially adapted reaction chamber. A gaseous mixture of oxygen and hydrogen is introduced into the reaction chamber, followed by a controlled explosion of this mixture, which leads to the rupture of the foam cell membranes. This process makes it possible to obtain foams permeable to gases and liquids, in a manner that is safe for the environment and for humans.

For the first time, a plastics manufacturing technology process incorporating the above-described method was patented in the USA in 1965 by Scott Paper & Co. (US3175025, US3171820). In this process, polyurethane foam after foaming, i.e. after the main production stage, undergoes a final treatment, i.e. crosslinking, resulting in a closed-cell foam block. From this block of foam, an open-cell foam is then produced.

A known and currently used process for reticulating foams is described below.

The first step of the method is to transport and load the foam block into the pressure chamber, whereby the foam can be loaded in manual or automatic manner. Then, the reticulation chamber is tightly closed by means of mounted clamps and hydraulic cylinders, and the air is removed from this chamber by means of a vacuum pump, thus creating a vacuum in it. In the next step, a gas mixture containing hydrogen and oxygen, with a suitable predetermined hydrogen to oxygen ratio and an absolute overpressure of up to 2 bar, is added to the reaction chamber. After the gas mixture is introduced into the chamber, the impregnation process takes place - the foam is left for some time in the gas atmosphere, allowing the gases to spread homogeneously in the foam structure by diffusion. The mixture of gases penetrates through the cell membranes in the foam structure and spreads along its entire cross-section. Between the foam block and the walls of the reaction chamber there is always a gap of a certain size, from which the explosive gas must be removed as far as possible and the non-flammable gas must be introduced instead. Therefore, in the next step, the operator measures the size of this gap and enters the obtained value manually into the process control program. On the basis of these data, the process control program calculates the amount of the explosive gas mixture (hydrogen and oxygen mixture) that should be replaced with a non-flammable gas in order to obtain the best possible protection of the side surfaces of the foam block, which may be damaged during the process. After the gas exchange, the next stage is carrying out a controlled explosion of an explosive gas mixture. By means of an electric spark generated by a spark plug, the mixture of explosive gases is ignited, and during an explosion a shock wave with a velocity of about 1000 m/s is released. The explosion and the accompanying thermal reactions result in the rupture and removal of cell membranes from the foam structure. After the explosive reaction is completed, the fumes are sucked off from the inside of the chamber, and the chamber itself is purged with non-flammable gas. Upon completion of the process, the chamber is opened and the resulting open-cell reticulated foam is discharged, again in a manual or automated manner.

Devices for carrying out the reticulation of foams are for example disclosed in patent applications GB1327399A, US3175025A, US5567740A and EP2727707A1.

The foams are produced in blocks of various sizes. As mentioned above, in the known reticulation process, a gap is formed between the foam block and the walls of the reaction chamber (reticulation chamber). The size of this gap varies, but it is usually not larger than 15 cm. The gap formation is due to manufacturing tolerances during the production of foam blocks and due to the fact that many types of foams are produced, which results in greater or lesser errors and deviations from the standard foam block size. The presence of the gap is generally undesirable, because the explosive gas present in this gap (on the sides of the foam block and above its upper surface) has a negative impact on the result of the reticulation process, i.e. on the quality of the end product - the processed material on the outside (from the gap side) is burned and deformed. As a result, after the reticulation process is completed, a large proportion of the material (reticulated foam) must be cut off and disposed. In order to at least slightly reduce the destructive effect of an explosive gas mixture, as mentioned above, part of this mixture is replaced with a non-flammable gas (nitrogen) before ignition, in order to reduce the amount of the explosive gas mixture that is present in the gap and which has a negative impact on the result of the reticulation process. In order to know how much of the gas needs to be replaced, the operator must measure the gap between the foam block and the chamber wall. The operator enters the gap dimensions manually into the process control program. The process control program calculates the amount of the explosive gas mixture to be replaced with a non-flammable gas. However, manual measurement of the gap size performed by the operator generates a measurement error that can be very large. Therefore, the presence of the human factor significantly reduces the accuracy of the gas volume measurement, which has a direct impact on the result of the reticulation process, as a result of which material losses are still very large, and the obtained product is not of as good quality as it could be. Moreover, the efficiency of the process is reduced and additional, unnecessary costs are generated.

### Summary of the invention

The objective of the present invention is to provide a stable and reliable process for reticulation of foams, which will allow to significantly minimize the loss of processed material. The present invention also provides an apparatus for reticulation of foams which enables carrying out the process according to the invention.

The present invention relates to a method for reticulating polymer foams comprising the steps of inserting a foam block into a reticulation chamber and tightly closing the chamber; creating a low vacuum in the reticulation chamber; introducing a mixture of flammable gases into the reticulation chamber and impregnation; replacing the flammable gas located in a gap between a surface of the foam block and walls of the reticulation chamber with non-flammable gas, consisting in removing from the reticulation chamber a certain volume of the mixture of flammable gas and introducing a certain volume of non-flammable gas into said chamber; carrying out a controlled explosion of the mixture of flammable gases; applying suction to remove fumes from the recirculation chamber and purging the chamber with non-flammable gas; opening the chamber and discharging the foam block, in which method
before introducing the foam block into the reticulation chamber, the foam block is scanned with a measuring device;
based on data obtained from the measuring device, at least one parameter of the foam block is determined;
the data collected by the measuring device relating to the at least one parameter of the foam block, and optionally, data obtained from flammable gas metering flow meters, are transmitted to a process controller;
based on the data transmitted to the process controller, the amount of non-flammable gas intended to be introduced into the gap between the foam block and the walls of the reticulation chamber is calculated.

Preferably, the parameters of the foam block to be determined are its geometrical dimensions.

Preferably, on the basis of the information on the geometric dimensions of the foam block, the volume of the material from which the foam block is made is calculated.

Preferably, in order to calculate the amount of gases, the data from the flammable gas metering flow meters are also transmitted to the process controller.

Preferably, calculations of the amount of non-flammable gas are computed taking into account the value of the atmospheric pressure and the temperature of the gases.

The invention also relates to an apparatus for reticulating foams suitable for carrying out the above method, said apparatus being provided with a reticulation chamber and means for introducing a foam block into said chamber; means for creating a low vacuum inside the reticulation chamber; means for supplying predetermined amounts of flammable and non-flammable gases into the chamber, such as flow meters; means for triggering a controlled explosion; a control device comprising a controller having at least a processor and a memory in which a process control program is stored, configured to control and manage the reticulation process; and a series of sensors measuring the operating parameters of the reticulation apparatus and other components necessary for the operation of the reticulation apparatus, wherein near the place of insertion of the foam block into the reticulation chamber a measuring device for scanning the foam block before the insertion of the foam block into the reticulation chamber is placed, wherein the measuring device is configured to collect and send to the controller of the control device data relating to at least one parameter of the foam block, and in that the control device is configured to calculate the amount of non-flammable gas necessary to replace a corresponding amount of flammable gas on the basis of the data obtained from the measuring device.

Preferably, a control device, configured to calculate the amount of non-flammable gas needed to replace the corresponding flammable gas amount, performs the calculations taking into account the data obtained from the flammable gas metering flow meters and/or the atmospheric pressure and gas temperature data.

Preferably, the measuring device is placed in front of an introduction opening of the reticulation chamber.

Preferably, the measuring device is a scanner equipped with a set of suitable measuring components and sensors for measuring the parameters of the foam block, such as its geometrical dimensions.

Preferably, the control device is configured to calculate, on the basis of the information relating to the geometrical dimensions of the foam block, the volume of the material from which the foam block is made.

### Advantageous effects of the invention

The present invention allows the maximum reduction of material losses in the reticulation process and for obtaining a final product of very high quality. By using automated measurement of the volume of the foam block, it is possible to accurately calculate the volume of gas to be replaced, essentially without measurement and transmission errors, and also to significantly reduce process duration. The automated measurement process itself is reliable, fast and stable.

### Brief description of the drawings

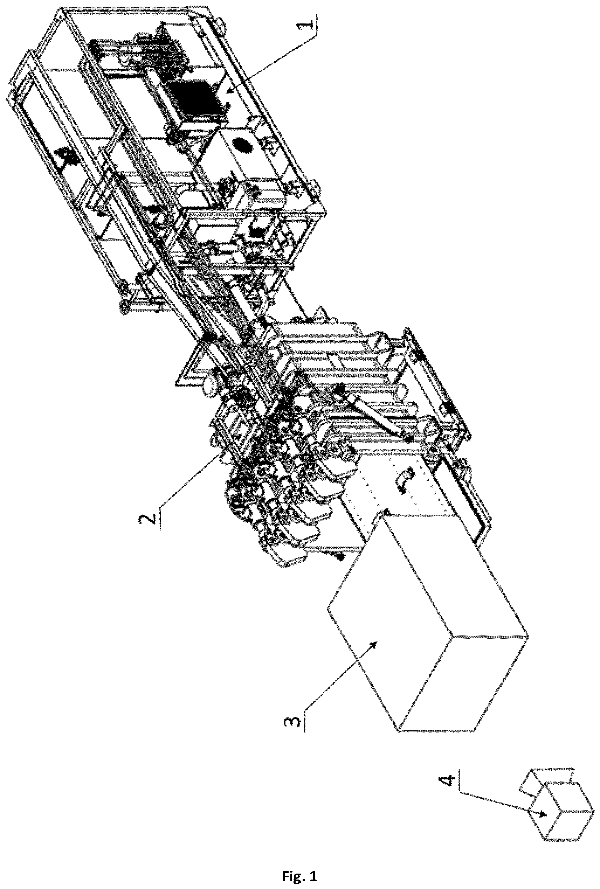

The subject-matter of the invention will now be illustrated in a preferred embodiment with reference to the accompanying drawing, wherein Fig. 1 shows an apparatus for reticulating foams.

### Detailed description of the preferred embodiment

The method for reticulation of foams is carried out by means of a reticulation apparatus. In the preferred embodiment, it is a reticulation device of a construction well known to the person skilled in the art, e.g. from prior art patent publications, supplemented with additional components necessary for the implementation of the method according to the invention. An exemplary reticulation apparatus is schematically illustrated in Fig. 1, which shows: a control device 1, a reticulation chamber 2, a processed material, i.e. a foam block 3, a measuring device 4. The reticulation apparatus generally takes the form of a pressure vessel with a hydraulically opening lid. The reticulation chamber 2 in the embodiment of Fig. 1 has the shape of a cuboid, however in other embodiments it may have any other (suitable) shape, for example of a cylinder. In the reticulation chamber 2, the processed material, i.e. the foam block 3, is placed. In the wall / walls of the reticulation chamber 2 holes are formed, in which spark plugs are mounted. In the wall / walls of the reticulation chamber 2 there are also valves for introducing and withdrawing flammable and non-flammable gases, air vent valves and a vacuum connection. The means for generating a vacuum can be, for example, a vacuum pump connected to the reticulation chamber 2 via said vacuum connection.

The processed material, i.e. the foamed plastic material based on polymers in the form of a foam block 3, is scanned by the measuring device 4 before being introduced into the reticulation chamber 2. The measuring device 4 can be a set of various types of known measuring devices and sensors, for example in the form of a scanner, and it allows the parameters of the foam block 3 to be determined, such as its geometric dimensions (in the case of a rectangular block - length, width and height), the exact volume or density of the foam block 3. The measuring device 4 in one embodiment is placed in front of the opening through which the foam block 3 is to be introduced into the reticulation chamber 2, i.e. opposite the lid of the reticulation chamber 2. However, such a position of the measuring device 4 is not necessary, since another suitable position of this device 4 is conceivable, for example above or below the foam block 3.

The non-flammable gas and the mixture of explosive gases are supplied to the reticulation chamber 2 by means of flow meters that measure a specific amount of gas. The necessary amount of purge gas is determined by a controller of the control device 1 on the basis of previously collected data from the measuring device 4, i.e., for example, from a scanner for determining to volume of the processed material, and from flammable gas metering flow meters. The reticulation apparatus also includes means needed to trigger a controlled explosion, such as for example a spark plug. The control system of the control device 1 may include a plurality of sensors measuring the operating parameters of the reticulation apparatus in order to control and manage the reticulation process. The control device 1 in a preferred embodiment may include a controller including at least a processor and a memory in which a process control program including instructions executed by the processor is stored. The control device 1 may also be in the form of any other controller, industrial computer, including a portable device such as a smartphone, laptop, tablet, as well as a stationary device - such as a desktop personal computer, which are known to the person skilled in the art and which allow the reticulation apparatus and process to be controlled.

In addition, the apparatus for reticulation is equipped with any other components necessary for its proper operation, which are known to the person skilled in the art, such as, for example, a power system or a cooling system.

The reticulation process carried out by means of the apparatus is described below.

The first step of the process, prior to placing the foam in the reticulation chamber 2, is the automatic measurement of the foam block 3 with the measuring device 4. The foam block 3 is measured / scanned with the measuring device 4 (e.g. a scanner) equipped with various types of known measuring devices and sensors, and the measurement results are sent to the controller of the process control device 1. The measurement of the foam block 3 performed with the measuring device 4 allows the control program stored in the memory of the controller or control device 1 to precisely determine the exact volume or density of the material to be processed, and thus to calculate the volume of gas to be replaced in an equally precise manner in order to eliminate the negative impact of the presence of a gap between the foam block 3 and the wall(s) of the reticulation chamber 2. The calculations are preferably carried out taking into account the value of the atmospheric pressure and the temperature of the gases. The next step is the transport and loading of the foam block 3 into the reticulation chamber 2, whereby the loading of the foam block 3 can be performed manually or automatically.

Then, the reticulation chamber 2 is tightly closed by the mounted clamps and hydraulic cylinders, and then the air is removed from this chamber 2 until low vacuum is obtained, which is carried out by any means for generating vacuum, for example by means of a vacuum pump connected to the reticulation chamber 2.

In the next step, a gas mixture containing hydrogen and oxygen is added to the reticulation chamber 2, with a suitable predetermined hydrogen to oxygen ratio and an absolute pressure of up to 2 bar. The mixture of explosive gases is fed to the reticulation chamber 2 by means of flow meters that measure a specific amount of gas.

After the gas mixture is introduced into the reticulation chamber 2, the impregnation process takes place - the foam is left for some time in a gas atmosphere, which allows the gases to spread homogeneously in the foam structure by diffusion. The gas mixture penetrates the cell membranes in the structure of the foam block 3 and diffuses throughout its entire volume.

Then a certain amount of non-flammable gas is introduced into the gap, and a suitable amount of explosive gas is discharged therefrom. Non-flammable gas is also blown through using a flow meter. The amount of gas needed for purging is precisely calculated - it is determined by the controller of the control device 1 on the basis of data previously collected from the measuring device 4, for example from a processed material volume scanner, and from flammable gas metering flow meters. The control device 1 calculates the amount of flammable gas to be discharged from the reticulation chamber 2 or the amount of non-flammable gas to be introduced into it, these values being interrelated and therefore the order of calculating the amount of a given gas / gas mixture is arbitrary.

The next step, normally, is to carry out a controlled explosion of an explosive gaseous mixture. The explosion is initiated by an electric spark generated by a spark plug. An explosion, during which a shock wave of a velocity of about 1000 m / s is released, and the accompanying thermal reactions cause the rupture and removal of the cell membranes from the foam structure, resulting in an open-cell foam structure. As already mentioned, the presence of the non-flammable gas in the gap makes it possible to protect the surface of the foam block 3, which, in the known process, is significantly damaged during an explosion.

After completion of the explosive reaction, in a manner known from the state of the art, the fumes are sucked out from the interior of the chamber 2 and the reticulation chamber 2 is purged with non-flammable gas. At the end of the process, the reticulation chamber 2 is opened and the foam block 3 is discharged, either manually or automatically, the foam block 3 now being an open-cell reticulated foam. The parameters for the post-treatment of the foam block 3, i.e. the deburring process, are selected depending on the type of material being processed, and this process can be carried out in any known manner.

## Claims

1. A method for reticulating polymer foams, comprising the steps of inserting a foam block (3) into a reticulation chamber (2) and tightly closing the chamber (2); creating a low vacuum in the reticulation chamber (2); introducing a mixture of flammable gases into the reticulation chamber (2) and impregnation; replacing the flammable gas located in a gap between a surface of the foam block (3) and walls of the reticulation chamber (2) with non-flammable gas, consisting in removing from the reticulation chamber (2) a certain volume of the mixture of flammable gas and introducing a certain volume of non-flammable gas into said chamber (2); carrying out a controlled explosion of the mixture of flammable gases; applying suction to remove fumes from the recirculation chamber (2) and purging the chamber (2) with non-flammable gas; opening the chamber (2) and discharging the foam block (3),
**characterized in that**
before introducing the foam block (3) into the reticulation chamber (2), the foam block (3) is scanned with a measuring device (4);
based on data obtained from the measuring device (4), at least one parameter of the foam block (3) is determined;
the data collected by the measuring device (4) relating to the at least one parameter of the foam block (3), and optionally, data obtained from flammable gas metering flow meters, are transmitted to a process controller;
based on the data transmitted to the process controller, the amount of non-flammable gas intended to be introduced into the gap between the foam block (3) and the walls of the reticulation chamber (2) is calculated.

2. The method according to claim 1, **characterized in that** the parameters of the foam block (3) to be determined are its geometrical dimensions.

3. The method according to claim 2, **characterized in that** on the basis of the information on the geometric dimensions of the foam block (3), the volume of the material from which the foam block (3) is made is calculated.

4. The method according to any of claims 1, 2 or 3, **characterized in that** in order to calculate the amount of gases, the data from flammable gas metering flow meters are also transmitted to the process controller.

5. The method according to any of the preceding claims, **characterized in that** the calculations of the amount of non-flammable gas are performed taking into account the value of the atmospheric pressure and the temperature of the gases.

6. An apparatus for reticulating foams suitable for carrying out a method according to any one of the claims 1-5, said apparatus being provided with a reticulation chamber (2) and means for introducing a foam block (3) into the chamber (2); means for creating a low vacuum inside the reticulation chamber (2); means for supplying predetermined amounts of flammable and non-flammable gases into the chamber (2), such as flow meters; means for triggering a controlled explosion; a control device (1) comprising a controller having at least a processor and a memory in which the process control program is stored, configured to control and manage the reticulation process; and a series of sensors measuring the operating parameters of the reticulation apparatus and other components necessary for the operation of the apparatus, **characterized in that** near the place of insertion of the foam block (3) into the reticulation chamber (2) a measuring device (4) that scans the foam block (3) before the insertion of the foam block (3) into the reticulation chamber (2) is placed, wherein the measuring device (4) is configured to collect and send to the driver of the control device (1) data relating to at least one parameter of the foam block (3), and **in that** the control device (1) is configured to calculate the amount of non-flammable gas necessary to replace a corresponding amount of flammable gas on the basis of data from the obtained from the measuring device (4).

7. The apparatus according to claim 6, **characterized in that** the control device (1) configured to calculate the amount of non-flammable gas needed to replace the corresponding flammable gas amount performs the calculations taking into account the data from the flammable gas metering flow meters and / or the atmospheric pressure and gas temperature data.

8. The apparatus according to claim 6 or 7, **characterized in that** the measuring device (4) is placed in front of an introduction opening of the reticulation chamber (2).

9. The apparatus according to claim 6, 7 or 8, **characterized in that** the measuring device (4) is a scanner equipped with a set of suitable measuring components and sensors for measuring the parameters of the foam block (3), such as its geometrical dimensions.

10. The apparatus according to claim 9, **characterized in that** the control device (1) is configured to calculate, on the basis of the information relating to the geometrical dimensions of the foam block (3), the volume of the material from which the foam block (3) is made.
